Europäisches Patentamt

European Patent Office

Office européen des brevets

(11) Numéro de publication: **0 475 162 A1**

## DEMANDE DE BREVET EUROPEEN

(21) Numéro de dépôt: **91114166.1**

(22) Date de dépôt: **23.08.91**

(51) Int. Cl.5: **H04L 27/38**, H04L 1/20

(30) Priorité: **27.08.90 FR 9010671**

(43) Date de publication de la demande:
**18.03.92 Bulletin 92/12**

(84) Etats contractants désignés:
**CH DE ES FR GB IT LI NL SE**

(71) Demandeur: **ALCATEL TELSPACE**
**5, rue Noel Pons**
**F-92734 Nanterre Cédex(FR)**
(84) **DE ES FR GB IT NL SE**

(71) Demandeur: **ALCATEL N.V.**
**Strawinskylaan 341**
**NL-1077 XX Amsterdam(NL)**

(84) **CH LI**

(72) Inventeur: **Le Polozec, Xavier**
**104-106, rue Cambronne**
**F-75015 Paris(FR)**
Inventeur: **Guillard, Jean-Christophe**
**4, Résidence des 3 Forêts**
**F-78380 Bougival(FR)**
Inventeur: **Fayol, Didier**
**171, rue de Buzenval**
**F-92380 Garches(FR)**

(74) Mandataire: **Weinmiller, Jürgen**
**Lennéstrasse 9 Postfach 24**
**W-8133 Feldafing(DE)**

(54) **Démodulateur hyperfréquence pour liaisons hertziennes numériques utilisant une modulation de type maq.**

(57) L'invention concerne un démodulateur hyperfréquence pour liaison hertzienne numérique utilisant une modulation de type MAQ, comprenant, sur une voie, un premier circuit (23) de compensation de l'erreur de quadrature (e φ) et, sur l'autre voie, un second circuit (12) qui permet de compenser le retard et les variations en température du premier circuit (23).

Application notamment au domaine des faisceaux hertziens numériques.

FIG. 1

L'invention concerne un démodulateur hyperfréquence pour liaisons hertziennes numériques utilisant une modulation de type MAQ.

Les transmissions de données au moyen de modulations numériques sont de plus en plus utilisées dans les faisceaux hertziens. Les faisceaux hertziens numériques développés jusqu'à ce jour avaient une structure hétérodyne comme pour les faisceaux hertziens analogiques. Mais les évolutions technologiques permettent aujourd'hui de concevoir des modulateurs et des démodulateurs réalisés directement en hyperfréquence. Des systèmes de transmission faible coût peuvent ainsi être réalisés.

Un article de J.P. BONIN intitulé "La démodulation hyperfréquence" paru dans "l'onde électrique" de janvier 1986 (volume 66, n° 1) décrit la structure générale d'un démodulateur hyperfréquence pour liaisons hertziennes numériques utilisant une modulation de type MAQ (modulation d'amplitude en quadrature). En conclusion il est dit que l'augmentation du débit numérique (nx34 Mbit/s ; 140 Mbit/s entraîne l'adoption de la modulation MAQ 16. Le démodulateur, au sens strict du terme, peut être développé très rapidement ; mais dépourvu d'équipements complémentaires adéquats, il présente une grande vulnérabilité aux troubles de propagation. Son association avec les plus performants des dispositifs d'adaptation d'un canal de transmission égaliseur temporel et diversité d'espace à recombinaison est nécessaire.

L'utilisation de la modulation MAQ, qui est de plus en plus complexe et possède une grande efficacité spectrale, rend les faisceaux hertziens plus sensibles aux dispersions, dues à la fabrication, des caractéristiques de chaque ensemble ou sous ensemble qui les constituent. En particulier l'erreur de quadrature du démodulateur, ainsi que la variation de celle-ci en fonction de la température, accroit le taux d'erreur de la liaison hertzienne.

L'invention a pour objet de pallier cet inconvénient.

Elle propose à cet effet un démodulateur hyperfréquence pour liaison hertzienne numérique utilisant une modulation de type MAQ, caractérisé en ce qu'il comprend, sur une voie, un premier circuit de compensation de l'erreur de quadrature et, sur l'autre voie un second circuit qui permet de compenser le retard et les variations en température du premier circuit.

Les caractéristiques et avantages de l'invention ressortiront d'ailleurs de la description qui va suivre, à titre d'exemple non limitatif, en référence aux figures annexées sur lesquelles :

- la figure 1 illustre le démodulateur de l'invention ;
- les figures 2 et 3 illustrent le fonctionnement de ce démodulateur.

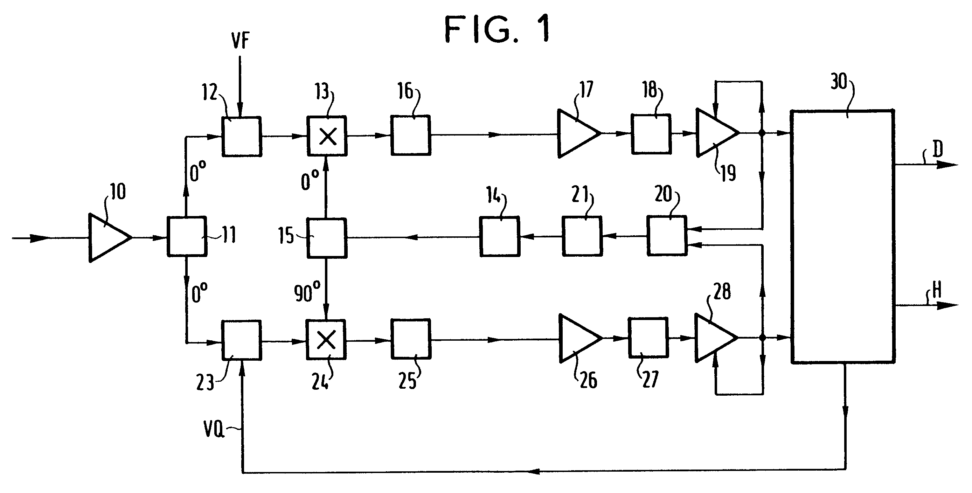

Le démodulateur de l'invention, tel que représenté sur la figure 1, comprend :

- un amplificateur à faible bruit 10 qui reçoit le signal hyperfréquence provenant de l'antenne et supportant le signal utile à démoduler,
- un coupleur 3dB 11 qui divise ce signal en deux signaux en phase selon deux voies,
  et sur la première de ces voies ;
- un premier déphaseur 12
- un premier mélangeur 13 alimenté avec un signal provenant d'un oscillateur local 14 via un coupleur 3 dB 0°-90° 15 ; cet oscillateur hyperfréquence commandé en tension étant asservi en phase par un traitement numérique de type COSTAS grâce à un estimateur de phase 20 suivi d'un filtre de boucle 21 ;
- un préamplificateur à faible bruit 17 ;
- un filtre 18 ;
- un amplificateur à CAG 19 (contrôle automatique de gain) dont la sortie I est reliée à l'estimateur de phase 20 ;
  et sur la seconde voie ;
- un second déphaseur 23 ;
- un second mélangeur 24 alimenté par le même signal que le premier mélangeur mais déphasé de 90° ;
- un filtre passe bas 25 ;
- un préamplificateur à faible bruit 26 ;
- un filtre 27 ;
- un amplificateur à CAG 28 dont la sortie Q est reliée à l'estimateur de phase 20 ;
  et
- un décodeur-régénérateur 30 délivrant le signal démodulé D ainsi que l'horloge H recevant les sorties I et Q des deux amplificateurs à CAG 19 et 28.

Le second déphaseur 23 est utilisé pour ajuster la mise en quadrature des composantes du signal à démoduler. Il est commande électriquement grâce à un signal issu du décodeur-régénérateur 30. Le premier déphaseur 12 est un dispositif de compensation de retard et de variation en température introduits par le second déphaseur 23 ; ce premier déphaseur 12 étant identique en tous points à ce second déphaseur 23 ; il a donc pour objet d'introduire un retard, un affaiblissement, et une variation thermique des caractéristiques identiques sur les deux voies. La commande électrique du premier déphaseur 12 reste fixe (tension VF) et a une valeur qui se situe environ au milieu de la plage de variation de la tension de commande (VQ) du second déphaseur 23.

Les filtres passe-bas 16 et 25 sont destinés à éliminer les fréquences non désirées.

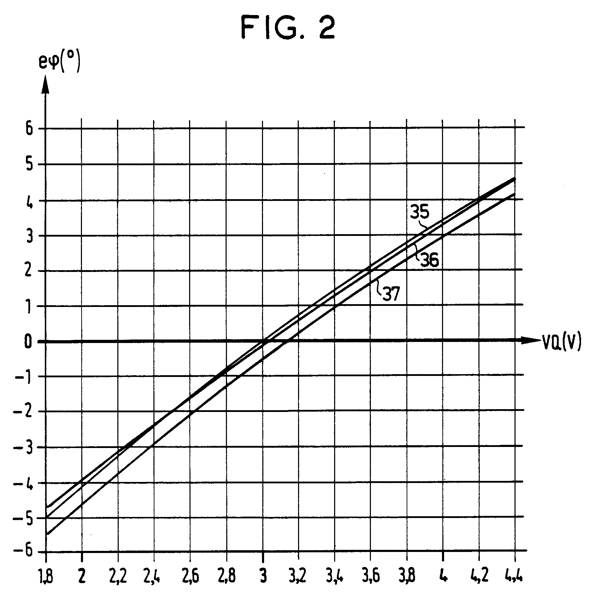

Les courbes 35, 36 et 37, représentées sur la figure 2 donnent la variation de l'erreur de quadrature de phase e $\phi$ (en degrés) en fonction de la tension de commande VQ (en volts) pour plusieurs fréquences de porteuse, soient :

- 6,4 GHz : courbe 35
- 6,75 GHz : courbe 36
- 7,1 GHz : courbe 37

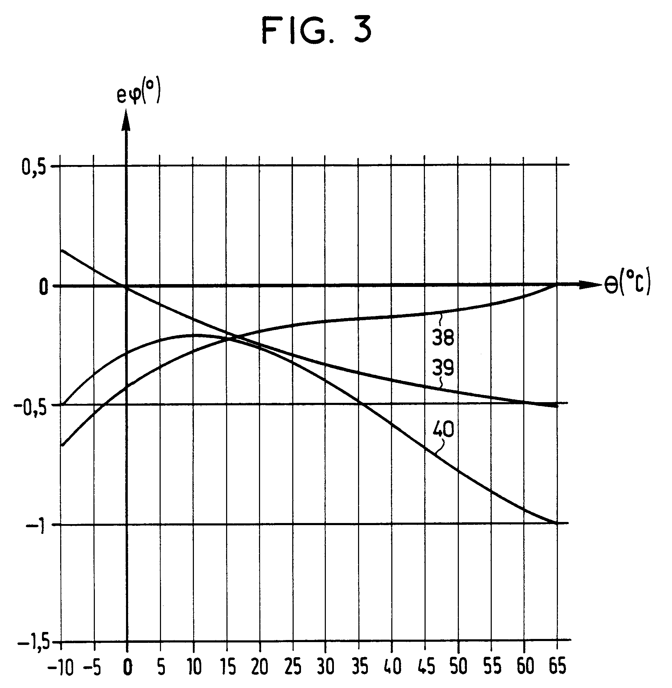

Les courbes 38, 39 et 40, représentées sur la figure 3, donnent la variation de l'erreur de quadrature de phase e $\phi$ (en degrés) en fonction de la température $\theta$ (en degrés celsius) pour plusieurs fréquences de porteuse soient :

- 6,4 GHz : courbe 38
- 6,75 GHz : courbe 39
- 7,1 GHz : courbe 40

Le démodulateur peut être réalisé en microstrip. Chaque déphaseur 12 ou 23 peut être réalisé avec un coupleur hybride 3dB 15 chargé à ses portes couplées par des diodes Varactor ; le coupleur 3dB 11 étant un coupleur Wilkinson.

Un tel démodulateur a été réalisé avec les caractéristiques suivantes :

- gamme de fréquences : 6,4 GHz-7,1 GHz
- pertes d'insertion < 8dB
- facteur de bruit < 8dB
- quadrature sans accord < ±3°
- erreur à 180° < ±1°
- ROS < 1,2
- erreur de quadrature de phase < 0,5° sur toute la gamme de fréquences avec la température variant de -10°C à + 65°C.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**Revendications**

1. Démodulateur hyperfréquence pour liaison hertzienne numérique utilisant une modulation de type MAQ, caractérisé en ce qu'il comprend, sur une voie, un premier circuit (23) de compensation de l'erreur de quadrature (e $\phi$ ) et, sur l'autre voie, un second circuit (12) qui permet de compenser le retard et les variations en température du premier circuit (23).

2. Démodulateur selon la revendication 1, caractérisé en ce qu'il comprend, sur ses deux voies, respectivement deux déphaseurs (12, 23) identiques.

3. Démodulateur selon la revendication 2, caractérisé en ce que le second circuit (12) est un déphaseur (12) commandé par une tension fixe (VF).

4. Démodulateur selon la revendication 3, caractérisé en ce que le premier circuit (23) est un déphaseur commandé électriquement grâce à un signal (VQ) issu du décodeur-régénérateur (30).

5. Démodulateur selon la revendication 4, caractérisé en ce que la tension fixe (VF) a une valeur qui se situe environ au milieu de la plage de variation du signal de commande (VQ) du premier circuit (23).

FIG. 1

## FIG. 2

# FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | HEWLETT-PACKARD JOURNAL<br>vol. 38, no. 11, Décembre 1987, PALO ALTO, US<br>pages 25 - 29;<br>GILDEA & CHAMBERS: 'Vector Modulation in a Signal Generator'<br>* page 28, colonne de gauche, alinéa 3 - page 29, colonne de gauche, alinéa 1; figure 9 *<br>--- | 1,2 | H04L27/38<br>H04L1/20 |
| A | EP-A-0 305 164 (HEWLETT-PACKARD)<br>* colonne 9, ligne 36 - ligne 58; figures 8,9 *<br><br>----- | 1,2 | |
| | | | **DOMAINES TECHNIQUES RECHERCHES (Int. Cl.5)**<br><br>H04L |

Le présent rapport a été établi pour toutes les revendications

| Lieu de la recherche | Date d'achèvement de la recherche | Examinateur |
|---|---|---|
| LA HAYE | 19 DECEMBRE 1991 | SCRIVEN P. |